# FASCICULE DE BREVET EUROPEEN

(11) **EP 2 341 427 B1**
(45) Date de publication et mention de la délivrance du brevet: **22.08.2012**
(21) Numéro de dépôt: 10191299.6
(22) Date de dépôt: 16.11.2010
(51) Int. Cl.: G06F 9/445, G06F 11/14, H04L 29/14, H04L 29/08

(54) **Redémarrage autonome des noeuds d'un réseau pair-à-pair**
Autonomer Neustart der Knoten eines Peer-to-Peer-Netzes
Autonomous restart of peer-to-peer network nodes

(30) Priorité: 04.01.2010 FR 1050002
(43) Date de publication de la demande: 06.07.2011
(73) Titulaire: Alcatel Lucent, 75007 Paris (FR)
(72) Inventeur: Tombroff, Dimitri, 91300, Massy (FR); Godfroid, Thierry, 78620, L'Etang la Ville (FR)
(74) Mandataire: Sciaux, Edmond

(56) Documents cités:
- EP-A1- 2 066 076
- US-A1- 2003 233 648
- SAMEER AJMANI ET AL: "Modular Software Upgrades for Distributed Systems", 1 janvier 2006 (2006-01-01), ECOOP 2006 - OBJECT-ORIENTED PROGRAMMING LECTURE NOTES IN COMPUTER SCIENCE;;LNCS, SPRINGER, BERLIN, DE, PAGE(S) 452 - 476, XP019041419, ISBN: 978-3-540-35726-1 * abrégé * * alinéa [1Introduction] - alinéa [2Overview] * * alinéa [6SchedulingFunctions] * * alinéas [9.2Real] - [WorldUpgrades] - alinéa [10Conclusions] * -& BREWER ERIC A.: "Lessons from Giant-Scale Services", IEEE INTERNET COMPUTING, 31 août 2001 (2001-08-31), pages 46-55, XP007914561,
- PANTA R K ET AL: "Hermes: Fast and Energy Efficient Incremental Code Updates for Wireless Sensor Networks", INFOCOM 2009. THE 28TH CONFERENCE ON COMPUTER COMMUNICATIONS. IEEE, IEEE, PISCATAWAY, NJ, USA, 19 avril 2009 (2009-04-19), pages 639-647, XP031468810, ISBN: 978-1-4244-3512-8

## Description

La présente invention concerne les réseaux pair-à-pair. Ces réseaux sont constitués d'un ensemble de noeuds inter connectés qui s'autogère.

Ces réseaux pair-à-pair peuvent être utilisés pour différentes applications, notamment de télécommunication. Pour certaines de ces applications, les noeuds doivent mémoriser des données. Ces données peuvent être des données relatives à une session de communication et doivent être alors retrouvées pour tout nouvel événement appartenant à la même session. Un réseau pair-à-pair peut être utilisé comme mémoire distribuée, et chaque noeud mémorise une partie des données qui sont accessibles via une table de hachage distribuée.

Certaines applications nécessitent une forte tolérance aux pannes. Aussi, afin d'éviter que la défaillance d'un noeud du réseau ne détruise irrémédiablement la part des données qu'il mémorisait, celles-ci peuvent être dupliquées sur un autre noeud. Ce mécanisme classique de redondance (dit « buddy replication ») permet au système d'être tolérant à la plupart des fautes impactant le réseau pair-à-pair.

Une implémentation d'un réseau pair-à-pair est davantage expliquée dans l'article "Chord: A scalable peer-to-peer Lookup Service for Internet Applications" de lan Stoica, Robert Morris, David Karger, M. Frans Kaashoek et Hari Balakrishanan, ACP SIGCOMM 2001, San Diego, CA, Août 2001; pp. 149-160

Il existe des articles qui exposent des méthodes pour améliorer la tolérence aux fautes dans un réseau "Chord". Par exemple, l'article "Availabiliy of multi-object operations" de Haifeng Yu, Philip B. Gibbons et Suman Nath propose de s'intéresser à la façon de dupliquer les données dans un tel réseau.

Chacun des noeuds du réseau contient des modules logiciels permettant au système de fonctionner. Ces modules logiciels permettent aux noeuds de communiquer selon un protocole prédéfini, de traiter les requêtes venant d'autres noeuds ou de systèmes extérieurs au réseau pair-à-pair, de gérer la duplication des données, etc.

Épisodiquement, ces modules logiciels peuvent nécessiter d'être changés ou mis à jour. Les mécanismes de mise-à-jour logiciels requièrent l'arrêt temporaire des noeuds, même s'il ne s'agit que d'installer une nouvelle version ne corrigeant qu'un problème mineur ou apportant une fonctionnalité nouvelle mais secondaire.

Toutefois, dans le cas d'un réseau pair-à-pair, ce redémarrage pose deux problèmes.

D'une part, les noeuds mémorisant des données, celles-ci doivent être sauvegardées pendant la phase de redémarrage.

D'autre part, pour certaines applications comme les applications de télécommunication, il est primordial d'assurer une continuité de service du réseau pair-à-pair. Autrement dit, pendant le redémarrage des noeuds, le réseau pair-à-pair doit continuer à fonctionner et à fournir le service applicatif prévu de façon transparente pour les dispositifs utilisateurs de ce service.

Dans le document EP2066076, une méthode et un dispositif sont divulgués pour transmettre un message dans un réseau P2P, comprenant une étape lors de laquelle un élément de réseau transmet d'abord ledit message à un élément d'un second réseau, ledit message comprenant ou étant associé à une action ou un déclencheur. Ledit message peut comporter une indication à l'élément de réseau recevant ledit message qu'il doit quitter le réseau P2P.

La présente invention a pour but de résoudre ces deux problèmes.

L'invention est définie dans les revendications indépendantes 1 et 5. Des modes de réalisation préférés de l'invention sont définis dans les revendications dépendantes.

Pour ce faire, elle consiste en un procédé de redémarrage d'un réseau pair-à-pair formé d'un ensemble de noeuds. Ce procédé est novateur en ce qu'il comporte une étape de détermination d'un premier noeud à redémarrer et d'un ensemble de noeuds connus dudit noeud à redémarrer; chaque noeud à redémarrer mettant en oeuvre avant de redémarrer :
- une étape d'élection d'un noeud suivant parmi les noeuds connus,
- une étape de transmission d'un message par le noeud à redémarrer vers les noeuds connus, contenant un identifiant du noeud suivant (élu
- dans l'étape précédente) ;
et en ce qu'à la réception du message, chaque noeud met en oeuvre:
- une étape de sauvegarde des sessions dupliquées, consistant à déterminer les sessions dupliquées entre ce noeud et le noeud à redémarrer, et à les dupliquer à nouveau,
- une étape de vérification si ce noeud est le noeud suivant en fonction du contenu du message, et dans ce cas considérer le noeud en question comme un noeud à redémarrer.

Selon un mode de réalisation de l'invention, l'étape de sauvegarde consiste à attendre le redémarrage du noeud à redémarrer puis à dupliquer les sessions dupliquées sur celui-ci.

Le message peut en outre contenir un identifiant du noeud suivant et l'étape de sauvegarde consiste alors à dupliquer les sessions dupliquées sur un noeud quelconque des noeuds connus sauf sur le noeud suivant et le noeud à redémarrer.

L'étape d'élection peut consister à déterminer un noeud suivant parmi les noeuds déployés sur un dispositif de traitement différent de celui sur lequel le noeud à redémarrer est déployé.

L'invention a également pour objet un réseau pair-à-pair comportant une pluralité de noeuds, certains au moins de ces noeuds mettant en oeuvre le procédé précédemment décrit.

Ainsi, l'invention propose un mécanisme de redémarrage séquentiel des noeuds couplés avec une stratégie de redéploiement dynamique des données dupliquées au sein du réseau. A chaque instant, les noeuds n'étant pas en redémarrage suffisent pour fournir le service applicatif.

En outre, le mécanisme ne nécessite pas d'intervention humaine : chaque noeud détermine automatiquement un noeud suivant à redémarrer.

De plus, les noeuds peuvent mettre en oeuvre ce mécanisme de façon autonome. Il ne nécessite pas de dispositifs centralisés ou extérieurs.

L'invention et ses avantages apparaîtront de façon plus claire dans la description qui va suivre en liaison avec la figure annexée qui représente schématiquement un réseau pair-à-pair.

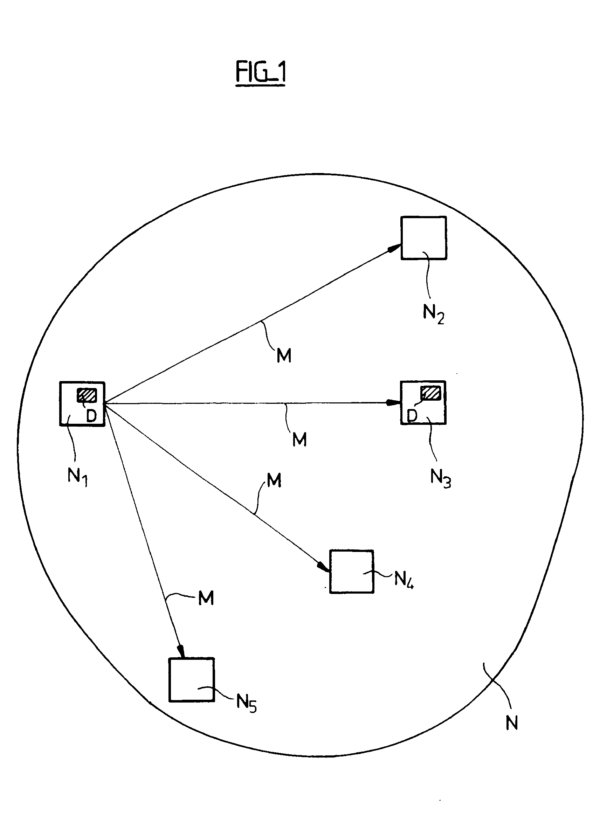

Le réseau pair-à-pair N représenté sur la figure 1 est composés de noeuds N1, N2, N3, N4, N5. Chaque donnée mémorisée dans un noeud est dupliquée dans un autre noeud distinct. Ainsi, les données D mémorisée dans le noeud N1 sont dupliquées dans le noeud N3. Ainsi, en cas de défaillance du noeud N1, ces données D seront toujours disponibles au sein du réseau pair-à-pair N.

Outre ces données, les noeuds disposent de modules logiciels.

Ces modules logiciels permettent de mettre en oeuvre les mécanismes et algorithmes particuliers gérant le réseau pair-à-pair. Ces mécanismes et algorithmes particuliers peuvent par exemple être ceux conformes au document « Chord » précédemment cité.

Selon l'invention, il dispose en plus de modules logiciels prévus pour la mise à jour des modules logiciels précédemment évoqués.

Comme nous le verront, ces modules logiciels comportent deux fonctions : une déclenchée à la réception d'un message de redémarrage, l'autre au moment du redémarrage.

On suppose que l'ensemble des noeuds disposent des mêmes modules logiciels. Cette hypothèse permet de simplifier la présentation de l'invention, mais celle-ci peut être adaptée pour s'appliquer à un réseau comportant des noeuds différenciés.

Le procédé de l'invention comporte une première étape de détermination d'un premier noeud à démarrer.

Cette initialisation du procédé se fait par l'émission d'un message par un dispositif extérieur vers le noeud déterminé. Ce dispositif extérieur peut être une console de contrôle du réseau pair-à-pair, par laquelle le programmateur peut déclencher la mise à jour ou le remplacement des modules logiciels embarqués sur les noeuds.

Ce message est reçu par le noeud déterminé et provoque le déclenchement d'une fonction de redémarrage.

Cette fonction de redémarrage comporte une étape d'élection d'un noeud suivant parmi les noeuds connus du noeud déterminé.

Cet ensemble des noeuds connus est au démarrage égal à l'ensemble des noeuds. Toutefois, au fil des redémarrages, les deux ensembles vont diverger. En effet, lorsqu'un noeud redémarre, il porte une nouvelle identité et bien qu'étant la même machine, il s'agit fonctionnellement d'un noeud différent. Par conséquent, au long de procédé selon l'invention, il y aura de moins en moins de noeuds appartenant à cet ensemble de noeuds connus initial.

Au sein de cet ensemble de noeuds connus (initial), il doit élire le noeud qui va redémarrer après lui. Ce choix peut être fait selon différents critères.

Un critère efficace est d'élire un noeud déployé sur un dispositif de traitement distinct du sien. En effet, dans un réseau pair-à-pair, les noeuds sont déployés sur un ensemble de machines ou dispositifs de traitement qui sont généralement en nombre inférieur à celui des noeuds. De fait, plusieurs noeuds sont habituellement déployés sur une même machine. Afin d'éviter des déséquilibres en charge du réseau N lors du processus de redémarrage, il est intéressant de répartir le redémarrage des noeuds dans le temps selon les dispositifs de traitement. Cette façon de faire évite qu'à un moment donné certaines machines possèdent beaucoup plus de noeuds que d'autres, provoquant ainsi une perte en performance du système.

Une autre mise en oeuvre peut consister à suivre l'anneau d'une table de hachage distribuée (DHT) déployée sur le réseau pair-à-pair. Ces deux mises en oeuvre peuvent également être combinées.

D'autres façons de faire sont bien évidemment également possibles mais il est important de noter que la détermination du noeud suivant est effectuée par les noeuds du réseau pair-à-pair eux-mêmes, sans l'intervention d'un dispositif extérieur et centralisé. Un des avantages de l'invention est de fournir un processus entièrement autonome et géré par le réseau pair-à-pair.

Une deuxième étape de la fonction de redémarrage est une étape de transmission d'un message M vers le sous-ensemble des noeuds connus. Ce message contient un identifiant du noeud suivant. Il peut également contenir un identifiant du noeud déterminé (émetteur du message) et un identifiant des noeuds du sous-ensemble des noeuds connus.

Une fois que l'ensemble des messages M a été correctement transmis, le noeud peut redémarrer. Ainsi qu'il est connu de l'homme du métier, un redémarrage peut comporter quelques prétraitements comme la terminaison des canaux de communication (« sockets ») ouverts avec les autres noeuds etc.

La fonction de redémarrage peut correspondre à une section critique durant laquelle le noeud arrête de créer de nouvelles sessions.

Le procédé selon l'invention comporte également une fonction de réception, déclenchée par la réception d'un message tel que précédemment décrit.

Cette fonction de réception comporte une étape de sauvegarde des sessions dupliquées. Cette étape consiste à d'abord déterminer les sessions impactées, c'est-à-dire qui sont dupliquées entre le noeud ayant reçu le message et le noeud l'ayant émis. Il importe peu de savoir lequel des deux noeuds possède la version « primaire » et qui possède la copie ; il est juste important de déterminer les sessions qui sont dupliquées entre ces deux noeuds.

Le noeud émetteur devant redémarrer, une des deux copies est amené à disparaître du réseau pair-à-pair et l'enjeu est de maintenir la redondance des informations même pendant cette phase de redémarrage du réseau N.

Pour ce faire, plusieurs mises en oeuvre sont possibles.

Dans une première mise en oeuvre, le noeud attend que le noeud émetteur ait redémarré. Lorsque celui-ci devient actif à nouveau, il déclenche une étape de duplication des données de sessions précédemment déterminées sur le noeud émetteur.

Dans une deuxième mise en oeuvre, le noeud déclenche la détermination d'un noeud sûr et duplique les données de session sur ce noeud sûr.

Ce noeud sûr peut être n'importe quel noeud du sous-ensemble des noeuds connus, sauf le noeud émetteur, et le noeud suivant à redémarrer (qui peut être transmis comme paramètre du message).

La fonction de réception comporte également une étape de vérification si le noeud récepteur est le noeud suivant déterminé par le noeud émetteur. Pour ce faire, l'identifiant du noeud suivant doit être inclus dans le message. Dans ce cas, le noeud récepteur doit être considéré comme un noeud à redémarrer et par conséquent, la fonction de redémarrage est automatiquement déclenchée.

Le processus se termine lorsque tous les noeuds ont redémarré. C'est-à-dire lorsqu'il n'existe plus un seul noeud appartenant à l'ensemble initial des noeuds connus (tous ont redémarré et changé d'identité.)

Grace au procédé de l'invention, les données de session sont conservées et disponibles tout au long du processus et le réseau pair-à-pair demeure opérationnel. En outre, les données de session restent dupliquées et le réseau pair-à-pair continue de respecter les exigences en termes de tolérance aux fautes.

## Revendications

1. Procédé de redémarrage d'un réseau pair-à-pair (N) formé d'un ensemble de noeuds (N₁, N₂, N₃, N₄, N₅) tel qu'il comporte une étape de détermination d'un premier noeud à redémarrer et d'un sous-ensemble de noeuds connus dudit premier noeud à redémarrer ; chaque noeud à redémarrer mettant en oeuvre avant de redémarrer :
• une étape d'élection d'un noeud suivant parmi des noeuds connus dudit noeud à redémarrer,
• une étape de transmission d'un message (M) par ledit noeud à redémarrer vers lesdits noeuds connus dudit noeud à redémarrer, contenant un identifiant dudit noeud suivant;
et en ce qu'à la réception dudit message, chaque noeud met en oeuvre:
• une étape de sauvegarde de sessions dupliquées consistant à déterminer les sessions (D) dupliquées entre ledit noeud et ledit noeud à redémarrer, et à les dupliquer à nouveau,
• une étape de vérification si ledit noeud est ledit noeud suivant en fonction du contenu dudit message, et dans ce cas considérer ledit noeud comme un noeud à redémarrer.

2. Procédé selon la revendication 1, dans lequel ladite étape de sauvegarde consiste à attendre le redémarrage dudit noeud à redémarrer puis à dupliquer lesdites sessions dupliquées sur celui-ci.

3. Procédé selon la revendication 1, dans lequel ladite étape de sauvegarde consiste à dupliquer lesdites sessions dupliquées sur un noeud quelconque desdits noeuds connus dudit noeud à redémarrer hormis ledit noeud suivant et ledit noeud à redémarrer.

4. Procédé selon l'une des revendications précédentes dans lequel l'étape d'éjection consiste à déterminer un noeud suivant parmi les noeuds déployés sur un dispositif de traitement différent de celui sur lequel ledit noeud à redémarrer est déployé.

5. Réseau pair-à-pair (N) comportant une pluralité de noeuds (N₁, N₂, N₃, N₄, N₅), chaque noeud de certains au moins desdits noeuds possédant des moyens pour mettre en oeuvre, à réception d'un message (M) d'un noeud à redémarrer contenant un identifiant d'un noeud suivant :
• une étape de sauvegarde de sessions dupliquées (D) consistant à déterminer les sessions dupliquées entre ledit chaque noeud et ledit noeud à redémarrer, et à les dupliquer à nouveau,
• une étape de vérification si ledit chaque noeud est ledit noeud suivant en fonction du contenu dudit message, et dans ce cas considérer ledit noeud comme un noeud à redémarrer.

## Claims

1. A method for restarting a peer-to-peer network (N) formed of a set of nodes (N1, N2, N3, N4, N5) that comprises a step of determining a first node to be restarted and a subset of nodes known to said first node to be restarted; wherein each node to be restarted implements, prior to restarting:
• A step of selecting a next node from among the nodes known to said node to be restarted,
• A step in which said node to be restarted transmits a message (M) to said nodes known to said node to be restarted, containing an identifier of said next node ;
and wherein upon receiving said message, each node implements:
• A step of backing up duplicate sessions, consisting of determining sessions (D) duplicated between said node and said node to be restarted, and of duplicating them again,
• A step of verifying whether said node is said next node, based on the message's content, and if so to consider said node as a node to be restarted.

2. A method according to claim 1, wherein said step of backing up consists of waiting until said node to be restarted has restarted, then duplicating said duplicated sessions onto it.

3. A method according to claim 1, wherein said step of backing up consists of duplicating said duplicate sessions onto any one of said nodes known to said node to be restarted, except said next node and said node to be restarted.

4. A method according to any one of the preceding claims, wherein the step of election consists of determining a next node from among the nodes deployed on a processing device different from the one on which said node to be restarted is deployed.

5. A peer-to-peer network (N) comprising a plurality of nodes (N1, N2, N3, N4, N5), at least some of these nodes possessing means for implementing the following, upon receiving a message from a node to be restarted containing an identifier of a next node:
• A step of backing up duplicate sessions (D), consisting of determining sessions duplicated between said node and said node to be restarted, and of duplicating them again,
• A step of verifying whether said node is said next node, based on the message's content, and if so to consider said node as a node to be restarted.

## Patentansprüche

1. Verfahren zum Neustart eines Peer-to-Peer-Netzwerks (N), bestehend aus einer Menge von Knoten (N₁, N₂, N₃, N₄, N₅), wobei das Verfahren einen Schritt des Bestimmens eines ersten neu zu startenden Knotens und einer Teilmenge von Knoten, die dem ersten neu zu startenden Knoten bekannt sind, umfasst; wobei jeder neu zu startende Knoten vor dem Neustart die folgenden Schritte durchführt:
• einen Schritt des Wählens eines Folgeknotens unter den dem besagten neu zu startenden Knoten bekannten Knoten,
• einen Schritt des Übertragens einer Nachricht (M), welche eine Kennung des besagten Folgeknotens enthält, durch den besagten neu zu startenden Knoten an die besagten dem besagten neu zu startenden Knoten bekannten Knoten ;
und wobei jeder Knoten bei Empfang der besagten Nachricht die folgenden Schritte durchführt:
• einen Schritt des Sicherns von duplizierten Sitzungen, welcher darin besteht, die duplizierten Sitzungen (D) zwischen dem besagten Knoten und dem besagten neu zu startenden Knoten zu bestimmen und diese erneut zu duplizieren,
• einen Schritt des Prüfens, ob der besagte Knoten gemäß dem Inhalt der besagten Nachricht der besagte Folgeknoten ist und, wenn dies der Fall ist, Berücksichtigen des besagten Knotens als einen neu zu startenden Knoten.

2. Verfahren nach Anspruch 1, wobei der besagte Schritt des Sicherns darin besteht, den Neustart des besagten neu zu startenden Knotens abzuwarten und anschließend die besagten duplizierten Sitzungen auf diesem zu duplizieren.

3. Verfahren nach Anspruch 1, wobei der besagte Schritt des Sicherns darin besteht, die besagten duplizierten Sitzungen auf einem beliebigen der besagten dem besagten neu zu startenden Knoten bekannten Knoten, mit Ausnahme des besagten Folgeknotens und des besagten neu zu startenden Knotens, zu duplizieren.

4. Verfahren nach einem beliebigen der vorstehenden Ansprüche, wobei der Schritt des Wählens darin besteht, einen Folgeknoten unter den auf einer anderen Verarbeitungsvorrichtung als auf derjenigen Vorrichtung, auf welcher der besagte neu zu startende Knoten eingesetzt wird, zu bestimmen.

5. Peer-to-Peer-Netzwerk (N), bestehend aus einer Vielzahl von Knoten (N₁, N₂, N₃, N₄, N₅), wobei jeder Knoten von zumindest bestimmten der besagten Knoten Mittel aufweist, um bei Empfang einer Nachricht (M) von einem neu zu startenden Knoten, welche eine Kennung eines Folgeknotens enthält, die folgenden Schritte durchzuführen:
• einen Schritt des Sicherns von duplizierten Sitzungen (D), welcher darin besteht, die duplizierten Sitzungen zwischen dem besagten jeden Knoten und dem besagten neu zu startenden Knoten zu bestimmen und diese erneut zu duplizieren,
• einen Schritt des Prüfens, ob der besagte jede Knoten gemäß dem Inhalt der besagten Nachricht der besagte Folgeknoten ist und, wenn dies der Fall ist, Berücksichtigen des besagten Knotens als einen neu zu startenden Knoten.
